# EUROPEAN PATENT SPECIFICATION

(11) **EP 1 455 221 B1**
(45) Date of publication and mention of the grant of the patent: **10.10.2007**
(21) Application number: 04251087.5
(22) Date of filing: 26.02.2004
(51) Int. Cl.: G03B 1/12, G03B 9/68

(54) **Camera with motorised film advancement**
Kamera mit motorischem Vorschub des Filmes
Caméra avec entraînement du film par moteur

(30) Priority: 28.02.2003 CN 03101538
(43) Date of publication of application: 08.09.2004
(73) Proprietor: Foster Assets Corporation, Wanchai, Hong Kong (CN)
(72) Inventor: Foster Assets Corporation, Wanchai, Hong Kong (CN)
(74) Representative: Howe, Steven

(56) References cited:
- GB-A- 2 228 798
- US-A- 5 565 945
- US-A- 5 881 320
- US-A- 5 946 511

## Description

### Background of the Invention

The present invention relates to a motorised camera and in particular to a camera of simple construction of the type generally sold to a customer pre-loaded with film and which is provided with motorised film advancement.

In the early 1990's cameras known variously as disposable or single-use cameras, or referred to by some as lens-fitted photographic film packages, became increasingly popular. These are cameras of simple construction and low cost which are usually pre-loaded with film by the manufacturer. It is usually arranged that the film is unwound from a standard film cassette or patrone on assembly of the camera, and as pictures are sequentially taken the film is wound back into the cassette. Once the user finishes the film, the user returns the entire camera to the photolab for developing of the film. The manufacturer may then either discard the camera in its entirety, or subject to appropriate checks that the camera is still functional, re-load the camera. Alternatively the manufacturer may re-use specific components of the camera. As the awareness of problems of environmental contamination increases, as well as for economic reasons, consumers are less willing to tolerate disposable products. Various cameras of this general type have been proposed including adaptations allowing them to be re-used at least several times by the user.

Of particular concern with such cameras is ease of reloading of film. It has previously been proposed by the applicant to provide the film for such cameras in the form of a film assembly comprising a standard film cassette or cartridge and a second film take-up cassette into which the majority of film is pre-wound. The applicant's US Serial Number 09/495,223 describes a method of film winding of such a film assembly and loading of such a film assembly into such a camera.

One of the drawbacks of such cameras from the point of the user is the requirement to manually wind on the film after each exposure, which necessarily takes time and is awkward, particularly for those of limited manual dexterity. Motorised film advancement is well-known for more costly types of cameras such as compact cameras and single lens reflex types, but in such cameras arrangements of considerable complexity are generally provided being inappropriate for cameras of the simple type as mentioned.

The present invention seeks to provide a motorised camera which overcomes these drawbacks.

### Summary of the Invention

According to a first aspect of the present invention there is provided a camera comprising a main body defining a pair of film chambers on opposite sides of an exposure opening comprising a first chamber for receiving a film cassette having a central spool to which film is secured and a second chamber for receiving a second film container into which film is pre-wound prior to use, a drive shaft having an end which extends into the first chamber for engaging the spool, an electric motor operably connected to the drive shaft to drive the drive shaft in one direction, a shutter mechanism including a movable shutter blade, and a shutter release assembly having a user-accessible shutter button and a shutter release lever having a primed position from which depression of the shutter button acts to cause the shutter release lever to strike the shutter blade, and a discharged position subsequent to depression of shutter button, and further comprising switch means in the form of first and second metallic spring contacts to control operation of the motor characterized in that the shutter release lever is arranged between the shutter button and the shutter blade, and holds the first and second spring contacts apart in the primed position, the switch means and shutter release assembly being arranged to activate the motor on depression of the shutter button and subsequent release. The shutter release assembly is preferably arranged to de-activate the motor on movement of the shutter release assembly from the discharged condition back to the primed position.

In the preferred embodiment the first and second metallic spring contacts are disposed to be separated in the primed position, and are preferably of parallel overlapping form. The contacts are arranged to remain separated after discharge of the shutter until the shutter button is released, at which point they engage.

Preferably, the second spring contact vertically overlies the first spring contact, wherein the shutter release lever is arranged to be depressible through the action of the shutter button against the action of resilient means such as a return spring, and to return to an upward position on return to the primed position, the shutter button also acting on the first spring contact to depress this on depression of the shutter button, and the second spring contact being bent away from the first by the shutter release lever in the primed position as allowed to move downwardly on discharge, whereby electrical contact is made after depression and subsequent release of the shutter button. The first spring contact is caused to bend downwardly by depression of the shutter button, moving up through its resilience on release of the shutter button. The first spring contact is caused to bend downwardly by depression of the shutter button, moving up through its resilience on release of the shutter button.

An actuating lever may be disposed between the shutter button and the first spring contact and the shutter release lever whereby depression of the shutter button causes depression of the first spring contact, and of the shutter release lever. The shutter release lever is preferably mounted for rotation about a vertical axis one end of which is adapted to strike the shutter blade, and the other end of which is acted on by a rotary cam driven to rotate by advancement of the film.

The rotary cam may comprise an angular cutout region defining at one edge thereof an abutment surface, and a circumferential cam surface extending between those opposite edges defining the cutout from a surface close to the cam axis to a surface more distant therefrom which connects to said abutment surface, said other end of the shutter release lever abutting the abutment surface in the primed position, and as the film is advanced subsequent to shutter release riding up the cam surface to rotate the shutter release lever back towards the primed position, the shutter release lever disengaging from the cam when the cutout is reached and being urged vertically against the abutment surface under the action of its return spring.

A third electrical contact may be provided spaced from and overlying the second spring contact and connected to the opposite side of the motor whereby electrical connection between the second and third contacts provides an electrical short across the motor, the shutter release lever forcing the second contact against the third as the shutter release lever moves up to the primed position.

A film sensing switch may be connected in series with the motor which serves to disable the motor in the absence of a loaded film.

The electric motor may be connected to the drive shaft through a gear train.

The camera may include a rear cover removable from the main body to expose the film chambers, a rotably mounted film counter operably connected to drive means which, in use, engage the film whereby the film counter is rotably driven on film advancement, the film counter comprising a circular member with peripheral teeth and including a spring to urge the counter towards a re-set position, the film advancement rotating the film counter against the action of the spring, and wherein ratchet means engage the film counter is ensure its rotation in one direction only on film advancement.

The ratchet means may comprise a resilient member extending from the rear cover and urged against the counter wheel, whereby on opening of the rear cover the ratchet means is disengaged allowing counter wheel to rotate under the action of its spring to its re-set position.

### Brief Description of the Drawings

An embodiment of the invention will now be described, by way of example only with reference to the following drawings in which:
Figure 1 is a perspective part-exploded view of the camera in accordance with an embodiment of the invention;
Figure 2 shows a film assembly, motor and drive gear train;
Figure 3 is a part-schematic view of a shutter release assembly and motor control switch in a default primed position;
Figure 4 shows part of the shutter release assembly in the default position;
Figure 5 shows the shutter mechanism, shutter release assembly and motor control switch in the default position;
Figure 6 is a part-schematic view of the shutter release assembly and motor control switch during photograph taking;
Figure 7 shows part of the shutter release assembly during photograph taking;
Figure 8 shows part of the shutter mechanism, shutter release assembly, and motor control switch during photograph taking;
Figure 9 is a part-schematic view of the shutter release assembly and motor control switch during film winding;
Figure 10 shows part of the shutter release assembly during film winding;
Figure 11 shows the shutter mechanism, shutter release assembly, and motor control switch during film winding;
Figure 12 is a part-schematic view of the shutter release assembly and motor control switch after winding returning to the default position;
Figure 13 shows part of the shutter release assembly after winding returning to the default position;
Figure 14 shows the shutter mechanism, shutter release assembly and motor control switch after winding returning to the default position;
Figure 15 shows the movement of the cam and shutter release lever during film winding;
Figure 16 shows the movement of the cam and shutter release lever moving back to the default position; and
Figure 17 is a view of a film frame counter.

### Detailed Description of the Preferred embodiment

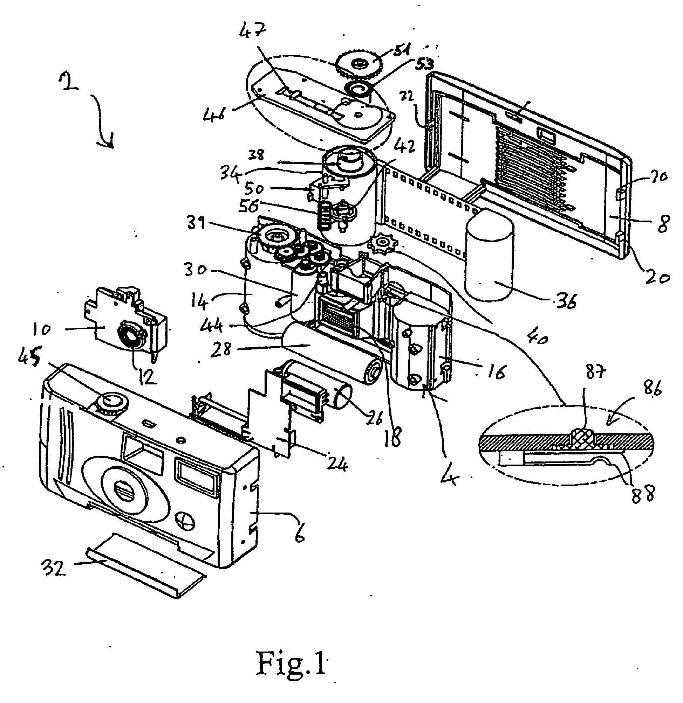

As seen in Figure 1, the camera, indicated generally by numeral 2, includes a main body part 4 which carries the majority of the operative components of the camera 2, and a front cover part 6 and rear or back cover part 8 which together enclose the main body 4. The main body 4 supports a shutter mechanism 10 provided with a lens assembly 12, a front portion of which extends through an aperture in the front cover part 6. The main body 4 defines part of a first film-cassette receiving chamber 14 which receives a film-containing cassette or patrone of a film package or assembly described further below. A second film receiving chamber 16 is arranged at the opposite side of the camera. Between the film chambers 14 and 16 is arranged an exposure window 18 located between upper and lower film guides which support the film at its edges as it extends between the film chambers. A film passageway for the film to travel between the film chambers 14 and 16 is defined between the back cover 8 and opposed region of the main body 4 and film guides.

The back cover 8 is hingedly secured to the front cover 6 through lugs 20 secured in slots or openings in the front cover 6 and a releasable latch 22 is provided at the opposite side of the cover 8 to allow opening and closing of the back cover 8 by the user and/or re-loader. Also visible in Figure 1 is a printed circuit board 24 supporting various components largely associated with the flash including capacitor 26. A battery or batteries 28 provides power for the flash and also for a film wind-on or advancement motor 30, discussed in further detail below. The motor is disposed to lie between the chambers 14, 16 with motor axis vertical, specifically between chamber 14 and the exposure window 18. The battery 28 is accessible at the base the camera 2 via a removable battery door 32.

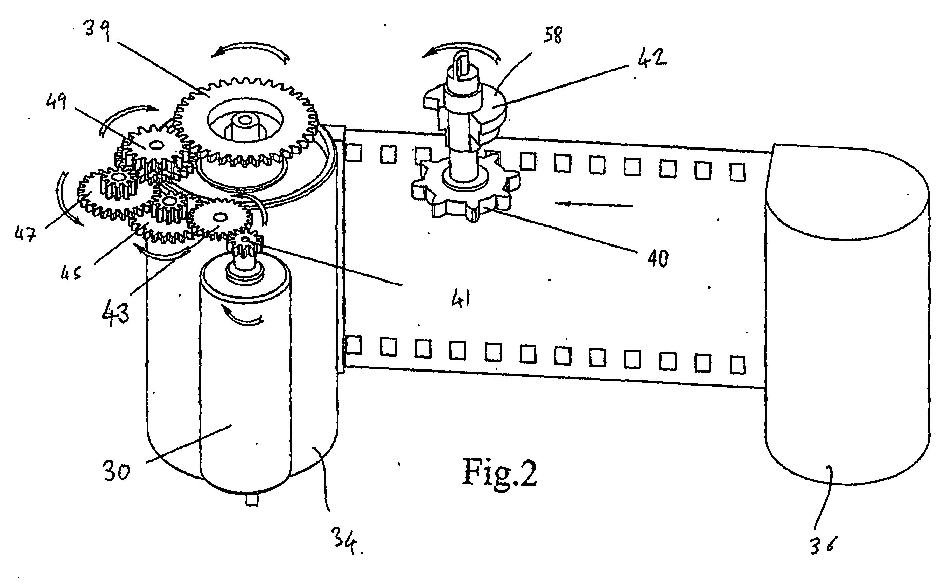

As best seen in Figure 2, the film is provided in the form of a film assembly comprising a first film cassette 34 which is a conventional 35mm cassette or patrone, and a second film container 36 preferably of a smaller dimension than a conventional cassette, into which the majority of the film is pre-wound either at the factory or before the assembly is supplied to the user in the case of a film to be re-loaded. Although not visible the film container 36 preferably comprises a housing which is formed as two housing shell halves and which co-operate to form an enclosure defining an elongate film slot between opposed edges. The patrone 34 has, as is conventional, a metal housing and a central spool 38, the film being wound about the spool 38 in a roll with a leading end secured to the spool 38 in a conventional manner. A drive gear 39 is connected to a drive shaft having a lower end with a fork-like protrusion (not visible) which extends into the patrone-receiving chamber 14 so as to engage the spool 38 of the cassette 34, with a gear train being provided between the motor 30 and the drive gear 39. As shown in Figure 2 there is provided a first gear 41 secured to the motor shaft, a second gear 143 meshed therewith, a third gear pair 145, fourth gear pair 147 and fifth gear pair 149 meshed to provide appropriate speed reduction. It will be appreciated that various other gear trains or drive arrangements including pulleys or belts could likewise be used.

A sprocket gear 40 is provided comprising eight sprocket teeth, the gear being precisely dimensioned so the circumference is the dimension of one film frame so that the teeth fit into the sprocket holes of a 35mm film and so that advance of the film by a single film frame causes precisely a single rotation of the gear 40. The sprocket gear 40 preferably comprises two separate parts as is described in applicant's US Patent Serial No. 09/792,392, namely a main gear part having seven spaced teeth and which defines an annular or a part-annular recess, and a slot at the position of the eighth tooth, and a separate alignment tooth part formed on a part-annular portion which constitutes an insert fitting into the recess. This allows the alignment tooth to be moulded out of a different coloured plastics material; for example, the majority of the camera components are usually of black moulded plastics; the alignment tooth may be of a contrasting colour such as white. The purpose of this is to ensure correct position of the sprocket and associated components or film loading. In an alternative modification, instead of forming the alignment tooth as a separate part, the sprocket wheel can instead have all eight teeth formed unitarily, and the alignment tooth can be painted a separate colour or coated in some other way to give a contrasting colour to the other seven teeth. In a still further alternative the alignment tooth is distinguished by some other indicating means such as use of a marking, indicia or symbol or letters or similar. In a still further alternative the alignment tooth may have a different shape to distinguish it from the other seven teeth. The sprocket gear 40 is supported on a rotary cam 42 best seen in Figure 2, and itself constrained to rotate about its longitudinal axis and supported between a locating well 44 on the main body and a plate 46.

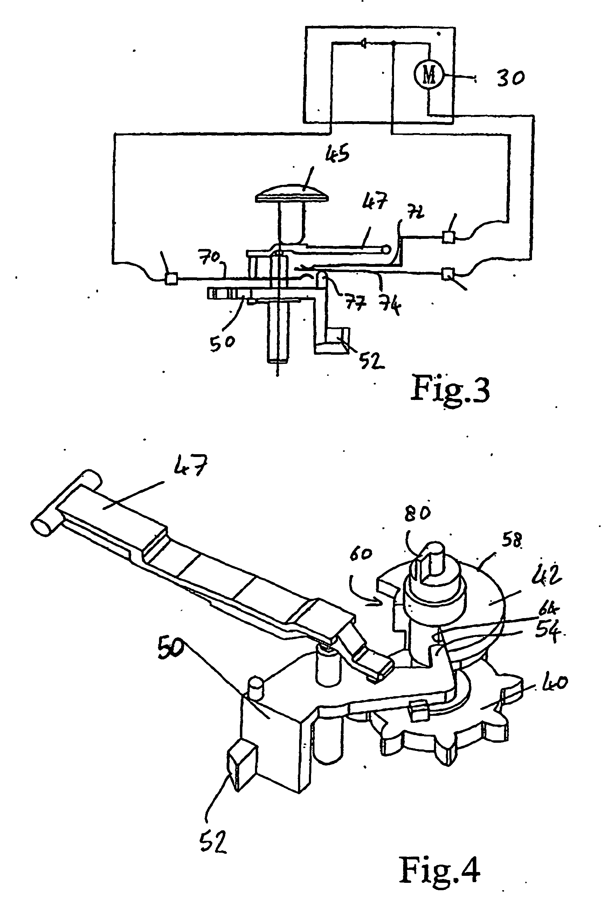

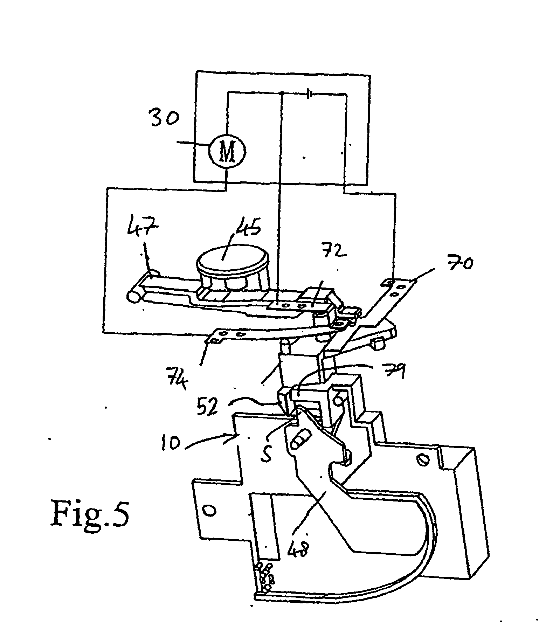

The shutter mechanism 10 contains a spring-loaded shutter plate or blade 48 best seen in Figure 5 which shows the mechanism with a front plate removed which has an exposed end S. A shutter release assembly, as shown for example in Figures 3 and 4 acts on the shutter blade, and includes a shutter release lever 50 for momentarily flicking the exposed end S of the shutter plate and thus opening an exposure aperture behind the lens to permit photographic exposure on the film through the lens 12 and exposure window 18. A shutter release button 45 is provided on the top of the front cover 6 so as to be depressible against the force of an upwardly biased spring (not visible) which lies beneath the button 45 and is supported on the plate 46. A shutter lock may be provided to prevent inadvertent depression of the shutter button 45. Beneath the button 45 is an actuator lever 47 supported to pivot about one end. The free end of the lever 47 is able to act against the shutter release lever 50 as discussed further below The plate 46 also supports a film frame counter 51 for rotation thereon, and a re-set coil spring 53, the operation of which is also discussed further below.

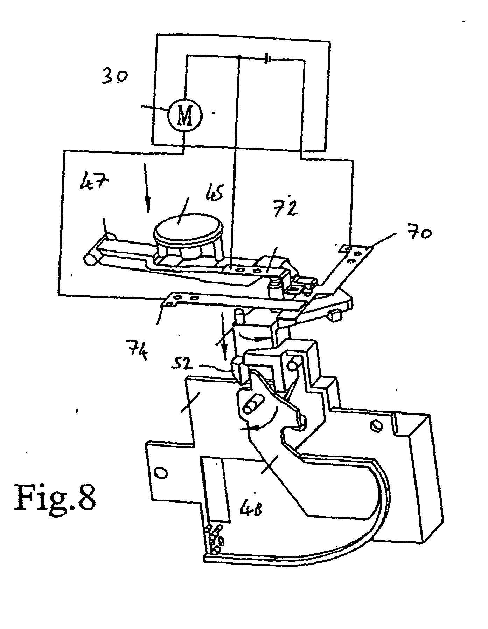

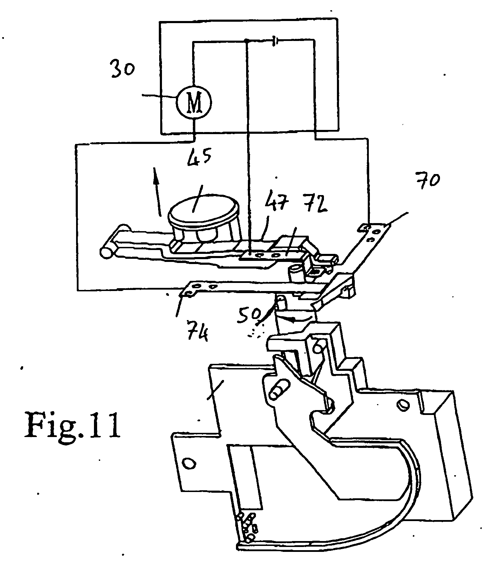

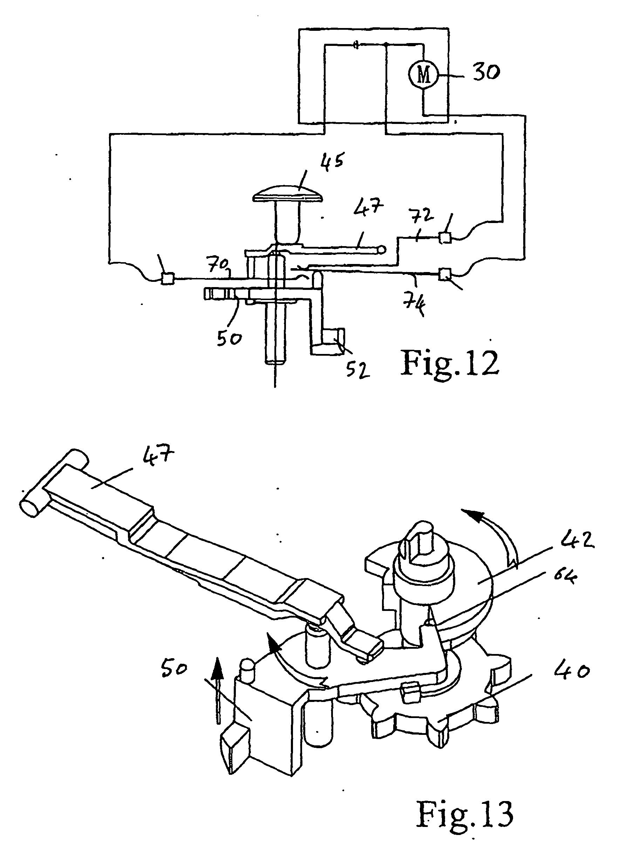

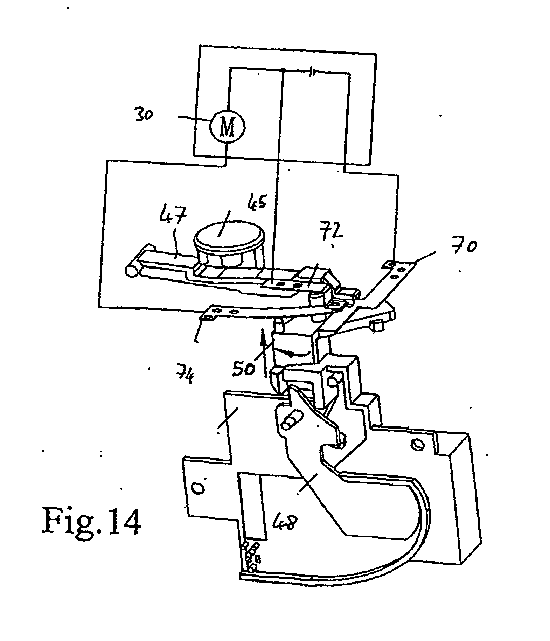

The shutter release lever 50 extends generally horizontally and is pivotably mounted to rotate about a vertical axis and is acted on by an assembly of the sprocket wheel 40 and the cam 42 the latter two being axially interengaged for simultaneous rotation. One end of the shutter release lever 50 has a first radially-extending projection 52 for engaging the shutter blade end S and a second tangentially extending (relative to the pivot) finger 54 for engaging the cam 42. The lever 50 is spring-loaded by spring 56 (omitted from Figures 3 to 14 for reasons of clarity) which urges it to turn in the anti-clockwise sense (viewed from above) and on release to thereby cause the second projection 52 to strike the shutter plate end S on taking a photograph. The spring 56 also urges the lever 50 upwardly.

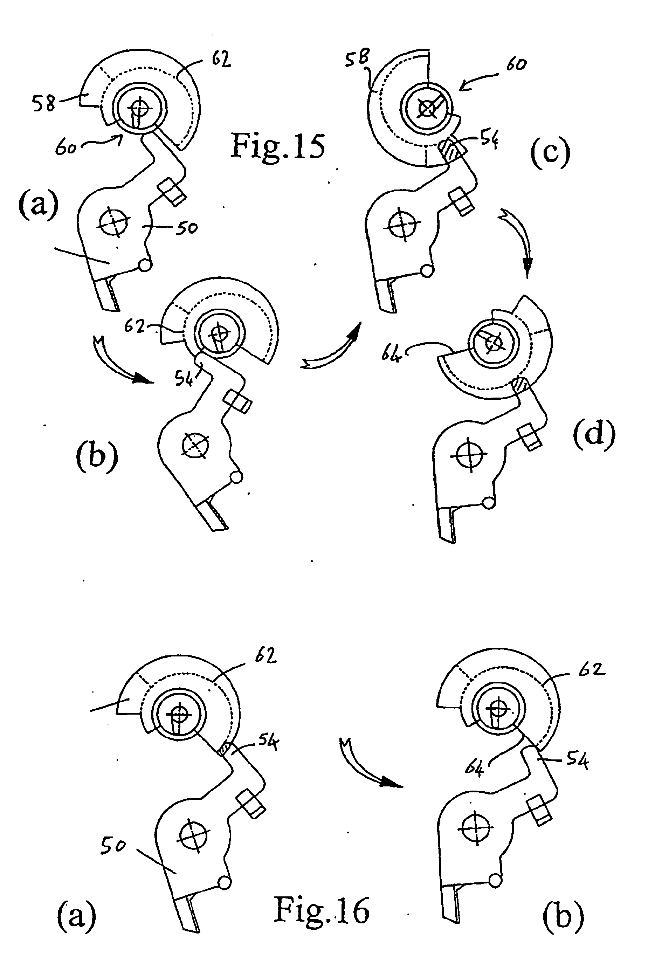

As noted, the sprocket 40 is keyed to the cam 42 so that upon movement of the film by the motor 30, the film rotates the sprocket 40 and in turn the cam 42 above it in the same direction. The cam 42 has an upper circular disc portion 58 having a side cutout 60 and below the disc portion a lower cam portion 62 radially expanding as one travels around the periphery (indicated in dotted lines in Figures 15 and 16). The edge region defining the trailing edge of the cutout 60 constitutes an abutment surface 64.

The electrical circuit for activating and interrupting the operation of the motor 30 is illustrated schematically for example in Figure 3, whilst Figure 5 shows the physical construction of electrical contacts. More particularly, the motor 30 is connected to a switch assembly comprising three movable contacts 70, 72 and 74. Activation, at the appropriate time, of the motorised wind-on of film, and shutter release and re-cocking is achieved in the manner as illustrated in Figures 3 to 14. Figure 3 shows the default or primed position. As can be seen in Figure 3, the shutter release button 45 is in its normal up position, where it is urged by its underlying spring. In this position the first contact 70 is spaced from the second contact 74 and a third contact 72 whereby the motor circuit is not completed. Contacts 72 and 74 however are touching. Second contact 74 is disposed so that in the primed position it is being upwardly deformed by a protrusion 77 extending upwardly from the lever 50. Turning to Figure 4 the finger 54 of the lever 50 abuts the abutment surface 64 of the cutout of the cam 42. The shutter release lever 50 is in its upmost position. The projection 52 laterally abuts a stop surface 79 on the shutter mechanism which overlies a slot at the position of the blade end S, and through this stop 79 is prevented from rotating in the anti-clockwise direction under the action of spring 56.

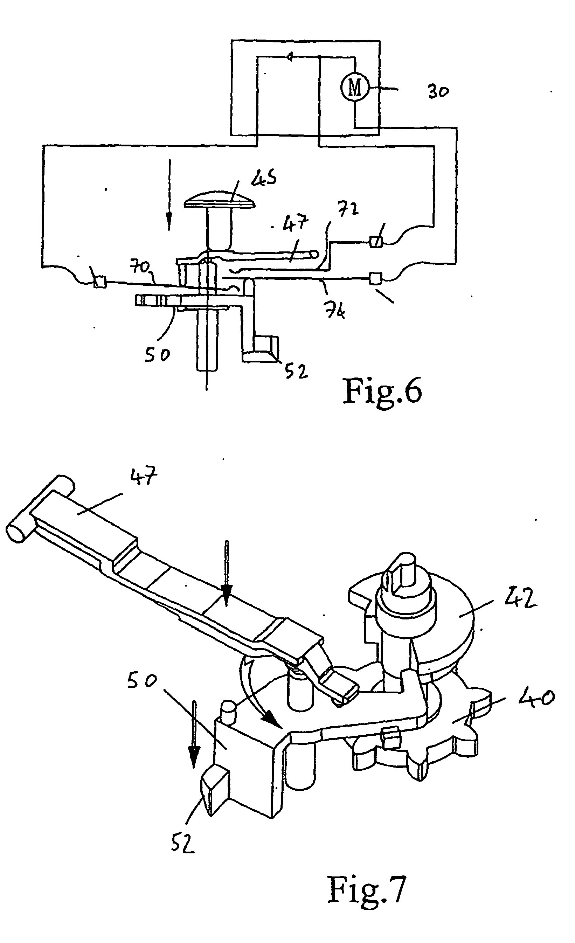

As the shutter button 45 is depressed on taking a picture as shown in Figures 6, 7 and 8, the actuator lever 47 moves down against the lever 50 against the force of the spring 56. The contact 70 is also urged downwardly as can be seen in Figure 3 by a projection depending from the underside of the lever, whilst contact 74 also moves down under its own resilience, disconnecting from contact 72. As the projection 52 clears the lower edge of the stop 79 on the shutter mechanism 10 the lever 50 is then able to rotate a small distance about its vertical axis in a counterclockwise direction (when viewed from above) under the rotational force of the spring 56, the projection 52 sweeping over the end S of the shutter blade. The shutter blade pivots momentarily in a clockwise sense (when viewed from the front, and as in Figure 4(c)) opening the shutter briefly before it is closed by the return force of its associated spring, and thereby exposing the film opposite the exposure opening.

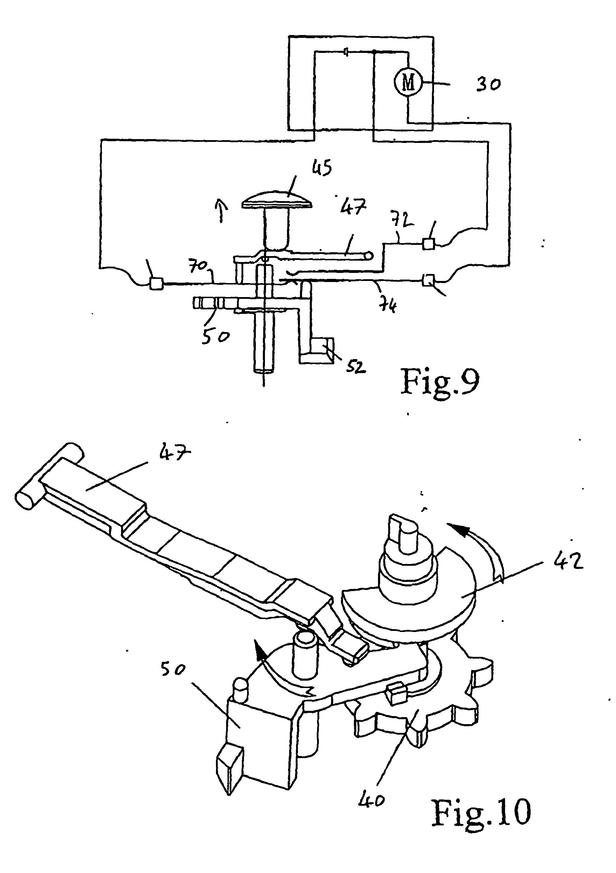

As indicated in Figure 9, when the shutter button 45 is released by the user the contact 70 moves upwardly urging the lever 47 upwardly with it. Contacts 70 and 74 become connected completing the motor circuit which thereby activates the motor, rotating the drive wheel 39 via the gear train and advancing the film and winding it back into the cassette 34. As the film advances the sprocket wheel 40 is rotated by means of the film perforations engaged therewith, rotating the cam 42 in an anticlockwise sense as indicated in Figure 10. Figure 15 illustrates the movement of the cam 42 and lever 50. Figure 15(a) shows the cam position on start of the motor. As shown in Figure 15(b) the cam 42 rotates clockwise, with the finger 54 riding up onto the cam surface 62 beneath the disc-like top portion 58. As this continues the finger 54 is being urged away from the cam axis thereby rotating the lever in a clockwise sense. As this continues the finger slides off the end of the cam surface 62 and onto the abutment surface 64 (Figures 16(a) and (b)), at which time the upward force of the spring 56 urges the lever 50 upwardly again, with finger 54 extending into the cutout of the cam 42 (Figure 16(b)). This represents the re-primed position identical to that of Figures 3, 4 and 5. This upward movement of the lever 50 causes the connection between contacts 70 and 74 to be broken stopping the motor. In addition, a connection between contacts 72 and 74 is made thereby short-circuiting the motor connection, having the effect of instantaneously dissipating any residual currents remaining within the motor for example due to the motor inductance.

Thus, the depression of the shutter button 45 by the user takes a photograph, whilst subsequent release initiates the film advancement by one frame which in turn re-cocks or re-primes the shutter ready for the next exposure.

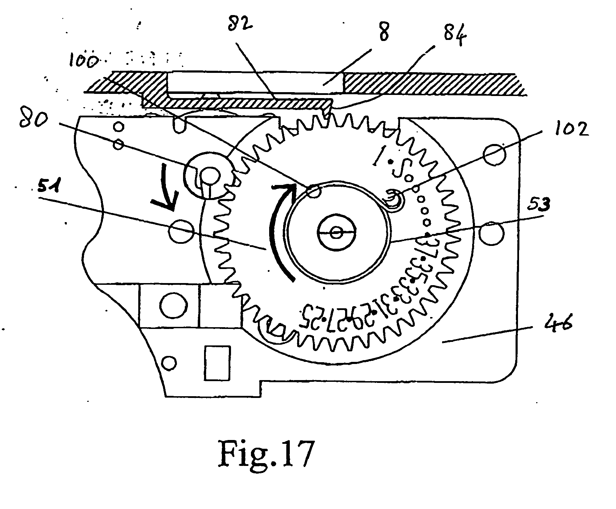

The rotation of the cam 42 also effects movement of the film counter wheel 51. As can be seen in for example Figure 4 and further enlarged in Figure 17, the top of the cam 42 includes a lateral projection 80. As the cam 42 makes a complete revolution, as occurs each time the film advancement sequence described above is carried out the cam projection 80 rotates, and engages the adjacent peripheral tooth of the counter wheel 51 driving it by an angular displacement which corresponds to one tooth. The counter wheel 51 is provided with an automatic re-set facility. Underneath the counter wheel there is provided a coil spring 53 (shown in Figure 17 although in reality it is disposed under the wheel) one end 100 of which is fixed to the plate 46, the other end 102 of which is secured to the underside of the counter wheel by means of a projection depending therefrom. A ratchet mechanism is provided in the form of springy leg 82 extending from the camera back door 8, generally parallel thereto having at its end a finger 84 which engages within the teeth of the counter wheel 51 shaped to engage within the teeth to prevent rotation of the counter wheel in the anticlockwise direction only. As the counter wheel 51 rotates on film advancement, the spring 53 becomes increasingly tensioned. However, when the back door 8 is opened, the ratchet disengages from the counter wheel 51, and the spring 53 returns the counter wheel to the re-set "zero" or start position.

The camera may also be provided with a film sensor to ensure that the motor operates only when there is film in the camera. As shown in the inset of Figure 1 the sensor 86 comprises a projection 87 mounted on one of a pair of metallic spring contacts 88 protruding through an opening in the main body facing the film guide. The contacts 88 constitute a switch located in series with the motor 30. When film is loaded the projection is urged such that the contacts 88 touch each other.

## Claims

1. A camera comprising a main body defining a pair of film chambers (14, 16) on opposite sides of an exposure opening comprising a first chamber (14) for receiving a film cassette having a central spool to which film is secured and a second chamber (16) for receiving a second film container into which film is pre-wound prior to use, a drive shaft (40) having an end which extends into the first chamber for engaging the spool, an electric motor (30) operably connected to the drive shaft to drive the drive shaft in one direction, a shutter mechanism including a movable shutter blade (48), and a shutter release assembly having a user-accessible shutter button and a shutter release lever having a primed position from which depression of the shutter button (45) acts to cause the shutter release lever to strike the shutter blade, and a discharged position subsequent to depression of shutter button, and further comprising switch means in the form of first and second metallic spring contacts (70, 74) to control operation of the motor **characterized in that** the shutter release lever (50) is arranged between the shutter button and the shutter blade, and holds the first and second spring contacts (70, 74) apart in the primed position, the switch means and shutter release assembly being arranged to activate the motor on depression of the shutter button and subsequent release.

2. A camera according to claim 1 wherein the switch means and shutter release assembly is arranged to de-activate the motor (30) on movement of the shutter release assembly from the discharged condition back to the primed position.

3. A camera according to claim 1 or 2 wherein the shutter release assembly and first and second spring contacts (70, 74) are arranged to maintain the contacts separated after discharge of the shutter until the shutter button (45) is released, at which point they engage.

4. A camera according to claim 1, 2 or 3 wherein the second spring contact (74) vertically overlies the first spring contact (70), wherein the shutter release lever is arranged to be depressible through the action of the shutter button against the action of resilient means, and to return to an upward position on return to the primed position, the shutter button also acting on the first spring contact (70) to depress this on depression of the shutter button, and the second spring contact (74) being bent away from the first by the shutter release lever in the primed position, and allowed to move downwardly on discharge whereby electrical contact is made after depression and subsequent release of the shutter button.

5. A camera according to claim 4 wherein the first spring contact (70) is caused to bend downwardly by depression of the shutter button, moving up through its resilience on release of the shutter button.

6. A camera according to claim 4 or 5 further comprising an actuating lever (48) disposed between the shutter button and the first spring contact (70) and the shutter release lever whereby depression of the shutter button causes depression of the first spring contact, and of the shutter release lever.

7. A camera according to claim 6 wherein the shutter release lever is mounted for rotation about a vertical axis and one end of the lever is adapted to strike the shutter blade on rotation, and the other end of which is acted on by a rotary cam (44) driven to rotate by advancement of the film.

8. A camera according to claim 7 wherein the rotary cam comprises an angular cutout region defining at one edge thereof an abutment surface, and a circumferential cam surface extending between those opposite edges defining the cutout from a surface close to the cam axis to a surface more distant therefrom which connects to said abutment surface, said other end of the shutter release lever abutting the abutment surface in the primed position, and as the film is advanced subsequent to shutter release riding up the cam surface to rotate the shutter release lever back towards the primed position, the shutter release lever disengaging from the cam when the cutout is reached and being urged vertically against the abutment surface under the action of its return spring.

9. A camera according to claim 4 or 5 wherein a third electrical contact (72) is provided spaced from and overlying the second spring contact (74) and connected to the opposite side of the motor whereby electrical connection between the second and third contacts provides an electrical short across the motor, the shutter release lever forcing the second contact against the third as the shutter release lever moves up to the primed position.

10. A camera according to claim 1 further comprising a film sensing switch connected in series with the motor which serves to disable the motor in the absence of a loaded film.

11. A camera according to claim 1 in combination with a film assembly comprising a standard film cassette having a central spool to which film is secured and a second film container within which the majority of the film is wound.

12. A camera according to any preceding claim wherein the electric motor is connected to the drive shaft through a gear train.

13. A camera according to any preceding claim further comprising a rear cover removable from the main body to expose the film chambers, a rotably mounted film counter operably connected to drive means which, in use, engage the film whereby the film counter is rotably driven on film advancement, the film counter comprising a circular member with peripheral teeth and including a spring to urge the counter towards a re-set position, the film advancement rotating the film counter against the action of the spring, and wherein ratchet means engage the film counter to ensure its rotation in one direction only on film advancement.

14. A camera according to claim 12 wherein the ratchet means comprises a resilient member extending from the rear cover and urged against the counter wheel, whereby on opening of the rear cover the ratchet means is disengaged allowing the counter wheel to rotate under the action of its spring to its re-set position.

## Patentansprüche

1. Kamera mit einem Hauptkörper, welcher ein Paar von Filmkammern (14, 16) auf gegenüberliegenden Seiten einer Belichtungsöffnung definiert, mit einer ersten Kammer (14) zum Aufnehmen einer Filmkassette mit einer zentralen Spule, an welcher Film gesichert ist, und einer zweiten Kammer (16) zum Aufnehmen eines zweiten Filmbehälters, in welche Film vor Verwendung vorgewickelt ist, einem Antriebsschaft (40) mit einem Ende, welches sich in die erste Kammer zum Eingreifen mit der Spule erstreckt, einem elektrischen Motor (30), in Betrieb mit dem Antriebsschaft verbunden, um den Antriebsschaft in eine Richtung anzutreiben, einem Verschlussmechanismus, einschließlich einer beweglichen Verschlusslamelle (48), und einer Verschlussfreigabeanordnung mit einem von einem Benutzer erreichbaren Verschlussknopf und einem Verschlussfreigabehebel mit einer vorbereiteten Position, von welcher aus ein Drücken des Verschlussknopfes (45) so wirkt, dass verursacht wird, dass der Verschlussfreigabehebel die Verschlusslamelle trifft, und eine entlastete Position im Anschluss an ein Drücken des Verschlussknopfes, und weiterhin ein Schaltermittel in der Form von ersten und zweiten metallischen Federkontakten (70, 74) aufweisend, um einen Betrieb des Motors zu steuern, **dadurch gekennzeichnet, dass** der Verschlussfreigabehebel (50) zwischen dem Verschlussknopf und der Verschlusslamelle angeordnet ist, und die ersten und zweiten Federkontakte (70, 74) in der vorbereiteten Position voneinander getrennt hält, wobei das Schaltermittel und die Verschlussfreigabeanordnung angeordnet sind, um den Motor bei einem Drücken des Verschlussknopfes und einem anschließenden Lösen zu aktivieren.

2. Kamera nach Anspruch 1, wobei das Schaltermittel und die Verschlussfreigabeanordnung derart angeordnet sind, dass der Motor (30) bei einer Bewegung der Verschlussfreigabeanordnung von der entlasteten Bedingung zurück in die vorbereitete Position deaktiviert wird.

3. Kamera nach Anspruch 1 oder 2, wobei die Verschlussfreigabeanordnung und erste und zweite Federkontakte (70, 74) derart angeordnet sind, um die Kontakte nach einem Entlasten des Verschlusses getrennt zu halten, bis der Verschlussknopf (45) gelöst wird, wobei sie zu diesem Zeitpunkt miteinander in Kontakt geraten.

4. Kamera nach Anspruch 1, 2 oder 3. wobei der zweite Federkontakt (74) vertikal über dem ersten Federkontakt (70) liegt, wobei der Verschlussfreigabehebel angeordnet ist, um durch die Wirkung des Verschlussknopfes gegen die Wirkung eines nachgiebigen Mittels drückbar zu sein, und in eine aufwärts gerichtete Position zurückzukehren bei einem Zurückkehren in die vorbereitete Position, wobei der Verschlussknopf auch auf den ersten Federkontakt (70) wirkt, um diesen auch bei einem Drücken des Verschlussknopfes zu drücken, und wobei der zweite Federkontakt (74) von dem ersten durch den Verschlussfreigabehebel in der vorbereiteten Position weggebogen ist, und wobei vorgesehen ist, dass er sich nach unten bei einer Entlastung bewegt, wodurch ein elektrischer Kontakt nach einem Drücken und einem anschließenden Lösen des Verschlussknopfes hergestellt wird.

5. Kamera nach Anspruch 4, wobei der erste Federkontakt (70) veranlasst wird, sich durch Drücken des Verschlussknopfes nach unten zu biegen, sich durch seine Entspannung bei einem Lösen des Verschlussknopfes nach oben zu bewegen.

6. Kamera nach Anspruch 4 oder 5, weiterhin einen zwischen dem Verschlussknopf und dem ersten Federkontakt (70) und dem Verschlussfreigabehebel angeordneten Betätigungshebel (48) aufweisend, wodurch ein Drücken des Verschlussknopfes ein Drücken des ersten Federkontaktes und des Verschlussfreigabehebels verursacht.

7. Kamera nach Anspruch 6, wobei der Verschlussfreigabehebel zur Rotation um eine vertikale Achse angebracht Ist, und ein Ende des Hebels angepasst ist, um die Verschlusslamelle bei Rotation zu treffen und wobei auf das andere Ende desselben durch einen rotierenden Nocken (44) angetrieben, um durch Vorschieben des Films zu rotieren, eingewirkt wird.

8. Kamera nach Anspruch 7, wobei der rotierende Nocken eine winklige Ausschnittsregion aufweist, welche an einer Kante derselben eine Wiederlageroberfläche definiert, und sich eine umfängliche Nockenoberfläche zwischen jenen gegenüberliegenden Kanten, die den Ausschnitt definieren, von einer Oberfläche in der Nähe der Nockenachse zu einer Oberfläche in einem Abstand davon erstreckt, welche an die Wiederlageroberfläche anschließt, wobei das andere Ende des Verschlussfreigabehebels an die Wiederlageroberfläche in der vorbereiteten Position angrenzt und dann, wenn der Film im Anschluss an eine Verschlussfreigabe vorgeschoben wird, die Nockenoberfläche hochrutschend, um den Verschlussfreigabehebel zurück in die vorbereitete Position zu rotieren wobei der Verschlussfreigabehebel sich von dem Nocken löst, wenn der Ausschnitt erreicht wird und vertikal gegen die Wiederlageroberfläche unter der Wirkung seiner Rückholfeder gezwungen wird.

9. Kamera nach Anspruch 4 oder 5, wobei ein dritter elektrischer Kontakt (72) in einem Abstand von und den über dem zweiten Federkontakt (74) liegend und verbunden mit der gegenüberliegenden Seite des Motors zur Verfügung gestellt wird, wodurch eine elektrische Verbindung zwischen den zweiten und dritten Kontakten einen elektrischen Kurzschluss über den Motor zur Verfügung stellt, wobei der Verschlussfreigabehebel den zweiten Kontakt gegen den dritten zwingt, wenn sich der Verschlussfreigabehebel nach oben in die vorbereitete Position bewegt.

10. Kamera nach Anspruch 1, weiterhin einen Filmerfassungsschalter aufweisend, verbunden in Serie mit dem Motor, welcher dazu dient, den Motor bei Abwesenheit eines geladenen Films abzuschalten.

11. Kamera nach Anspruch 1, in Kombination mit einer Filmanordnung mit einer Standardfilmkassette mit einer zentralen Spule, auf welche Film gesichert ist, und einem zweiten Filmbehälter, Innerhalb welchem die Mehrzahl des Films aufgewickelt ist.

12. Kamera nach einem der vorstehenden Ansprüche, wobei der elektrische Motor mit dem Antriebsschaft durch eine Zahnradverbindung verbunden ist.

13. Kamera nach einem der vorstehenden Ansprüche, weiterhin eine rückwertige Abdeckung aufweisend, von dem Hauptkörper entfernbar, um die Filmkammern zu exponieren, einen rotierbar angebrachten Filmzähler, im Betrieb mit den Antriebsmitteln verbunden, im Gebrauch, mit dem Film eingreift, wodurch der Filmzähler bei einem Vorschieben des Films rotierbar angetrieben wird, wobei der Filmzähler ein kreisförmiges Element mit peripheren Zähnen aufweist, und eine Feder aufweist, um den Zähler in Richtung einer Resetposition zu zwingen, wobei ein Vorschieben des Films den Filmzähler gegen die Wirkung der Feder rotiert, und wobei Klinkenmittel mit dem Filmzähler eingreifen, um seine Rotation in einer Richtung nur bei einem Vorschieben des Films zu sichern.

14. Kamera nach Anspruch 12, wobei das Klinkenmittel ein elastisches Element aufweist, welches sich von der rückwärtigen Abdeckung erstreckt und gegen das Zählerrad gezwungen ist, wodurch beim Öffnen der rückwärtigen Abdeckung das Klinkenmittel außer Eingriff kommt, was es dem Zählerrad erlaubt, unter der Wirkung seiner Feder in die Resetposition zu rotieren.

## Revendications

1. Appareil photo comprenant un corps principal définissant une paire de chambres de pellicule (14, 16) sur les côtés opposés d'une ouverture d'exposition comprenant une première chambre (14) pour recevoir une cassette de pellicule ayant une bobine centrale sur laquelle la pellicule est fixée et une seconde chambre (16) pour recevoir un second contenant de pellicule dans lequel la pellicule est pré-enroulée avant l'utilisation, un arbre d'entraînement (40) ayant une extrémité qui s'étend dans la première chambre pour mettre en prise la bobine, un moteur électrique (30) raccordé à l'arbre d'entraînement de manière opérationnelle pour entraîner l'arbre d'entraînement dans une direction, un mécanisme d'obturateur comprenant une pale d'obturateur mobile (48), et un ensemble de déverrouillage d'obturateur ayant un bouton d'obturateur accessible par l'utilisateur et un levier de déverrouillage d'obturateur ayant une position amorcée à partir de laquelle l'enfoncement du bouton d'obturateur (45) sert à amener le levier de déverrouillage d'obturateur à heurter la pale d'obturateur, et une position déchargée ultérieure à l'enfoncement du bouton d'obturateur, et comprenant en outre des moyens d'interrupteur se présentant sous la forme de premier et second contacts à ressort métallique (70, 74) pour commander le fonctionnement du moteur **caractérisé en ce que** le levier de déverrouillage d'obturateur (50) est agencé entre le bouton d'obturateur et la pale d'obturateur, et maintient les premier et second contacts à ressort (70, 74) à distance dans la position amorcée, les moyens d'interrupteur et l'ensemble de déverrouillage d'obturateur étant agencés pour activer le moteur suite à l'enfoncement du bouton d'obturateur et au déverrouillage suivant.

2. Appareil photo selon la revendication 1, dans lequel les moyens d'interrupteur et l'ensemble de déverrouillage d'obturateur sont agencés pour désactiver le moteur (30) suite au mouvement de l'ensemble de déverrouillage d'obturateur à partir de la condition déchargée pour revenir à la position amorcée.

3. Appareil photo selon la revendication 1 ou 2, dans lequel l'ensemble de déverrouillage d'obturateur et les premier et second contacts à ressort (70, 74) sont agencés pour maintenir les contacts séparés après la décharge de l'obturateur jusqu'à ce que le bouton d'obturateur (45) soit libéré, auquel point ils se mettent en prise.

4. Appareil photo selon la revendication 1, 2 ou 3, dans lequel le second contact à ressort (74) recouvre verticalement le premier contact à ressort (70), dans lequel le levier de déverrouillage d'obturateur est agencé pour pouvoir être enfoncé par l'action du bouton d'obturateur contre l'action des moyens élastiques, et pour revenir à une position droite suite à la position amorcée, le bouton d'obturateur agissant également sur le premier contact à ressort (70) pour enfoncer celui-ci suite à l'enfoncement du bouton d'obturateur, et le second contact à ressort (74) étant plié à distance du premier par le levier de déverrouillage d'obturateur dans la position amorcée, et autorisé à se déplacer vers le bas suite à la décharge, moyennant quoi le contact électrique est réalisé après l'enfoncement et le relâchement suivant du bouton d'obturateur.

5. Appareil photo selon la revendication 4, dans lequel le premier contact à ressort (70) est amené à se plier vers le bas par l'enfoncement du bouton d'obturateur, remontant par son élasticité suite au relâchement du bouton d'obturateur.

6. Appareil photo selon la revendication 4 ou 5 comprenant en outre un levier d'actionnement (48) disposé entre le bouton d'obturateur et le premier contact à ressort (70) et le levier de déverrouillage d'obturateur moyennant quoi l'enfoncement du bouton d'obturateur provoque l'enfoncement du premier contact à ressort, et du levier de déverrouillage d'obturateur.

7. Appareil photo selon la revendication 6, dans lequel le levier de déverrouillage d'obturateur est monté pour la rotation autour d'un axe vertical et une extrémité du levier est adaptée pour heurter la pale d'obturateur en rotation, et dont l'autre extrémité est actionnée par une came rotative (44) entraînée pour tourner par l'avancement de la pellicule.

8. Appareil photo selon la revendication 7, dans lequel la came rotative comprend une région de découpe angulaire définissant au niveau de son bord une surface de butée, et une surface de came circonférentielle s'étendant entre ces bords opposés définissant la découpe à partir d'une surface à proximité de l'axe de came jusqu'à une surface plus distante de celle-ci qui se raccorde à ladite surface de butée, ladite autre extrémité du levier de déverrouillage d'obturateur venant en butée contre la surface de butée dans la position amorcée, et lorsque la pellicule est avancée suite au relâchement de l'obturateur montant sur la surface de came pour faire retourner le levier de déverrouillage d'obturateur vers la position amorcée, le levier de déverrouillage d'obturateur se dégageant de la came lorsque la découpe est atteinte et étant poussé verticalement contre la surface de butée sous l'action de son ressort de rappel.

9. Appareil photo selon la revendication 4 ou 5, dans lequel un troisième contact électrique (72) est espacé de et recouvrant le second contact à ressort (74) et raccordé au côté opposé du moteur moyennant quoi le raccordement électrique entre les second et troisième contacts provoquent un court-circuit électrique sur le moteur, le levier de déverrouillage d'obturateur forçant le second contact contre le troisième lorsque le levier de déverrouillage d'obturateur remonte à la position amorcée.

10. Appareil photo selon la revendication 1, comprenant en outre un commutateur de détection de pellicule raccordé en série avec le moteur qui sert à désactiver le moteur en l'absence de pellicule chargée.

11. Appareil photo selon la revendication 1, en combinaison avec un ensemble de pellicule comprenant une cassette de pellicule standard ayant une bobine centrale sur laquelle la pellicule est fixée et un second conteneur de pellicule dans lequel la majorité de la pellicule est enroulée.

12. Appareil photo selon l'une quelconque des revendications précédentes, dans lequel le moteur électrique est raccordé à l'arbre d'entraînement par le biais d'un train d'engrenages.

13. Appareil photo selon l'une quelconque des revendications précédentes, comprenant en outre un couvercle arrière pouvant être retiré du corps principal pour exposer les chambres de pellicule, un compteur de pellicule monté de manière rotative, raccordé de manière opérationnelle aux moyens d'entraînement qui, à l'usage, met en prise la pellicule moyennant quoi le compteur de pellicule est entraîné de manière rotative suite à l'avancement de la pellicule, le compteur de pellicule comprenant un élément circulaire avec des dents périphériques, et comprenant un ressort pour pousser le compteur vers une position ré-initialisée, l'avancement de la pellicule faisant tourner le compteur de pellicule contre l'action du ressort, et dans lequel des moyens de cliquet mettent en prise le compteur de pellicule pour garantir sa rotation dans une direction uniquement suite à l'avancement de la pellicule.

14. Appareil photo selon la revendication 12, dans lequel les moyens de cliquet comprennent un élément élastique s'étendant à partir du couvercle arrière et poussé contre la roue conjuguée, moyennant quoi suite à l'ouverture du couvercle arrière, les moyens de cliquet sont dégagés, permettant à la roue conjuguée de tourner sous l'action de son ressort jusqu'à sa position ré-initialisée.
